# EUROPÄISCHE PATENTSCHRIFT

(11) **EP 0 471 209 B1**
(45) Veröffentlichungstag und Bekanntmachung des Hinweises auf die Patenterteilung: **08.03.1995**
(21) Anmeldenummer: 91112189.5
(22) Anmeldetag: 20.07.1991
(51) Int. Cl.: F16D 3/50, F16D 3/74

(54) **Verdrehbegrenzung für eine Wellenkupplung**
Torsion limiter for a flexible coupling
Limiteur de torsion pour accouplement élastique

(30) Priorität: 15.08.1990 DE 4025777
(43) Veröffentlichungstag der Anmeldung: 19.02.1992
(73) Patentinhaber: Stromag Aktiengesellschaft, 59425 Unna (DE)
(72) Erfinder: Künne, Michael, W-4670 Lünen (DE)
(74) Vertreter: Wilhelm & Dauster Patentanwälte European Patent Attorneys

(56) Entgegenhaltungen:
- EP-A- 0 090 075
- EP-A- 0 245 668
- DE-A- 1 425 297
- FR-A- 1 505 134
- GB-A- 576 691

## Beschreibung

Die Erfindung betrifft eine Verdrehbegrenzung für eine Wellenkupplung gemäß dem Oberbegriff des Patentanspruches 1.

Derartige Verdrehbegrenzungen finden insbesondere für hochelastische Wellenkupplungen Verwendung (Sonderdruck der Stromag GmbH "Vulkanisationsverbindungen bei hochelastischen Gummikupplungen), um bei einer Beschädigung der elastischen Bauteile eine Notmitnahme für die Kupplung zu bewirken. Dabei soll zum einen gewährleistet sein, daß in beiden Drehrichtungen derselbe maximale Verdrehwinkel zulässig ist, und zum anderen, daß bei der Notmitnahme die drehmomentübertragenden, aneinanderstoßenden Nockenflächen äquidistant um die Kupplungsachse verteilt sind. Letzteres beugt Störungen vor, die bei unsymmetrischer Krafteinwirkung aufgrund von Verbiegungen oder Unwuchteffekten auftreten könnten.

Es ist hierzu bekannt, die beiden Begrenzungsteile in einer gemeinsamen, zur Kupplungsachse senkrechten Querebene anzuordnen. Jedes Begrenzungsteil weist zwei sich diametral gegenüberliegende Nocken auf. Die Nocken des inneren Begrenzungsteils sind bei nicht verdrehter Kupplung gegenüber denjenigen des äußeren Begrenzungsteils um 90° versetzt, so daß jeder Nocken des einen Begrenzungsteils sich mittig innerhalb des Winkelbereichs zwischen den beiden Nocken des anderen Begrenzungsteils befindet.

Insbesondere bei hochelastischen Wellenkupplungen, bei denen bereits im Normalbetrieb ein verhältnismäßig großer Verdrehwinkel möglich und zulässig ist, ist ein ausreichend großer maximaler Verdrehwinkel bei der Verdrehbegrenzung vorzusehen. Der maximale Verdrehwinkel ist bei der oben geschilderten, bekannten Anordnung jedoch bereits theoretisch auf weniger als 90° beschränkt, wobei in der Praxis, wo u.a. aus Stabilitätsgründen Nockenwinkelbreiten von ca. 30° typisch sind, allenfalls ein maximaler Verdrehwinkel von ca. 60° erreicht werden kann. Dies ist für gewisse Anwendungsfälle nicht ausreichend, zum Beispiel für hochelastische Wellenkupplungen mit mehreren hintereinandergeschalteten gummielastischen Kupplungskörpern. So würde die bekannte Verdrehbegrenzung bei einer solchen Wellenkupplung mit drei hintereinandergeschalteten Kupplungskörpern, für die jeweils ein Verdrehwinkel von ca. 20° im Normalbetrieb auftreten kann und zulässig ist, zum Anschlagen der Nocken bereits während dieses Normalbetriebs führen.

Der Erfindung liegt die Aufgabe zugrunde, eine Verdrehbegrenzung zu schaffen, die einen vergleichsweise großen und in beiden Drehrichtungen identischen maximalen Verdrehwinkel zuläßt und bei welcher im Falle der Notmitnahme die gegeneinanderstoßenden Nockenflächen einen äquidistanten Winkelabstand aufweisen.

Die Aufgabe wird bei einer Verdrehbegrenzung der eingangs genannten Art durch die kennzeichnenden Merkmale des Patentanspruches 1 gelöst.

Diese Ausgestaltung ermöglicht einen maximalen Verdrehwinkel bis zum Einsetzen der Notmitnahme von wesentlich mehr als 90°, nämlich von 180° abzüglich der Winkelbreite eines Nockens.

So ergibt eine Ausgestaltung der Erfindung bei einer Nockenwinkelbreite von 30° einen maximalen Verdrehwinkel von 150° in beiden Richtungen.

Eine vorteilhafte Verwendung für die Verdrehbegrenzung ergibt sich nach Anspruch 3 bei Anordnung an einer hochelastischen Wellenkupplung, deren Kupplungshälften über mehrere axial hintereinandergeschaltete, gummielastische Kupplungskörper verbunden sind. Hierzu ist das innere Begrenzungsteil an einer mit dem einen Ende der Kupplungskörperanordnung drehfest verbundenen Kupplungsnabe und der äußere Begrenzungsring stirnseitig an dem anderen Ende der Kupplungskörperanordnung festgelegt. Trotz der mehreren, vorzugsweise drei, axial hintereinandergeschalteten, gummielastischen Kupplungskörper, deren Verdrehwinkeltoleranzen sich durch diese Hintereinanderschaltung addieren, ist für diese Kupplung eine den Normalbetrieb nicht störende Verdrehbegrenzung erreicht. Dies gilt insbesondere auch noch dann, wenn drei gummielastische Kupplungskörper hintereinandergeschaltet sind, für die zusammen im Normalbetrieb ein Gesamtverdrehwinkel für die Kupplung von mehr als 60° zulässig ist.

Eine vorteilhafte Ausführungsform der Erfindung ist in den Zeichnungen dargestellt und wird nachfolgend beschrieben. Es zeigen:
- Fig. 1: eine Verdrehbegrenzung mit zwei Nocken pro Begrenzungsteil im Längsschnitt entlang der Linie (I-I) der Fig. 2,
- Fig. 2: die Verdrehbegrenzung in einer Draufsicht in Richtung (II) in Fig. 1,
- Fig. 3: eine Hälfte einer hochelastischen Wellenkupplung mit einer Verdrehbegrenzung nach Fig. 1 im Längsschnitt und
- Fig. 4: eine schematische Draufsicht auf eine andere Ausführungsform einer Verdrehbegrenzung mit drei Nocken pro Begrenzungsteil.

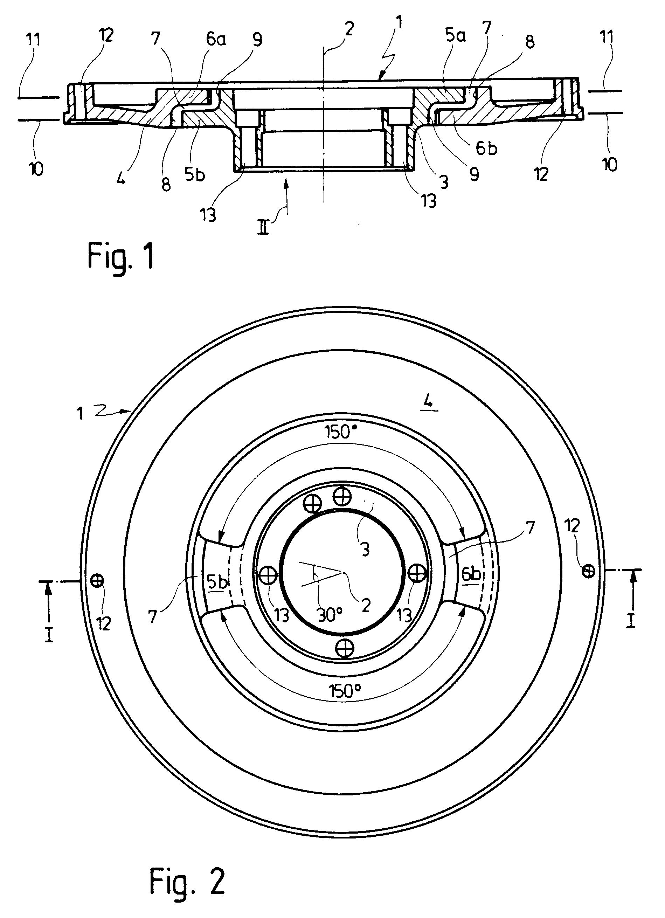

Die in Fig. 1 dargestellte Verdrehbegrenzung (1) besteht im wesentlichen aus einem inneren, hülsenförmigen Begrenzungsteil (3) und einem äußeren, ringförmigen Begrenzungsteil (4). Beide Begrenzungsteile (3, 4) sind koaxial um eine gemeinsame Achse (2) drehbar angeordnet, wobei innen am inneren Begrenzungsteil (3) Bohrungen (13) und außen am äußeren Begrenzungsteil (4) Bohrungen (12) eingebracht sind, durch die die beiden Begrenzungsteile (3, 4) an jeweils einer Kupplungshälfte lösbar, zum Beispiel über Schraubverbindungen, angebracht werden können.

Am Außenumfang (9) des inneren Begrenzungsteils (3) sind einander bezüglich der Achse (2) um 180° gegenüberliegend zwei Anschlagnocken (5a, 5b) radial nach außen weisend angeformt. Analog sind zwei Anschlagnocken (6a, 6b) um 180° um die Achse (2) versetzt am Innenumfang (8) des äußeren Begrenzungsrings (4) radial nach innen weisend angeformt. Die Fig. 1 und 2 zeigen die Verdrehbegrenzung (1) in unverdrehter Ausgangsstellung. Aus Fig. 1 ist ersichtlich, daß jeweils ein Nocken (5b, 6b) jedes Begrenzungsteils (3, 4) in einer zur Achse (2) senkrechten Querebene (10) verläuft, während die beiden anderen Nocken (5a, 6a) in einer dazu axial versetzten Querebene (11) verlaufen. Der Abstand der beiden Querebenen (10,11) ist größer als die axiale Breite der Nocken (5a, 5b, 6a, 6b), so daß dazwischen ein Spalt (7) gebildet ist und bei Verdrehungen um die Achse (2) stets nur die in der gleichen Querebene (10 bzw. 11) liegenden Nocken (5b, 6b bzw. 5a, 6a) aneinander anschlagen können. Letzteres wird dadurch gewährleistet, daß der Radius eines die Innenseite der Nocken (6a, 6b) tangierenden Kreises, also der Abstand der Nockenenden (6a, 6b) von der Achse (2), kleiner ist als der Radius eines die Außenseite der Nocken (5a, 5b) tangierenden Kreises, also kleiner als der Abstand der Enden der Nocken (5a, 5b) von der Achse (2).

Die beiden Begrenzungsteile (3, 4) sind relativ zueinander so angeordnet, daß in der in den Fig. 1 und 2 gezeigten, unverdrehten Ausgangsstellung den Nocken (5a, 5b) des inneren Begrenzungsteils (3) jeweils ein Nocken (6a, 6b) des äußeren Begrenzungsteils auf der anderen Querebene durch den Spalt (7) getrennt axial fluchtend gegenüberliegt. So liegt der Nocken (5a) in der Querebene (11) dem in der Querebene (10) liegenden Nocken (6b) axial gegenüber, während der andere Nocken (5b) des inneren Begrenzungsteils (3) in der Querebene (10) liegt und dem in der Querebene (11) liegenden Nocken (6a) gegenüberliegt.

Wie aus Fig. 2 hervorgeht, sind die Nocken (5a, 5b, 6a, 6b) jeweils mit einer Winkelbreite von 30° versehen. Daraus resultiert zusammen mit der oben beschriebenen Anordnung der beiden Begrenzungsteile (3, 4) in der Ausgangslage ein maximal möglicher Verdrehwinkel von 150°. Die Verdrehbegrenzung ist, wie gezeigt, nach beiden Seiten symmetrisch und setzt dann ein, wenn nach einer Verdrehung der beiden Begrenzungsteile (3, 4) um 150° relativ zueinander die jeweils in einer Querebene (10 bzw. 11) liegenden Nocken (5b, 6b bzw. 5a, 6a) aneinanderschlagen. Bei weiterer Verdrehung setzt durch dieses paarweise Anschlagen der Nocken (5a, 6a bzw. 5b, 6b) eine bezweckte Notmitnahme der Kupplungshälfte auf der Abtriebsseite ein. Die beschriebene Nockenanordnung gewährleistet, daß während der Notmitnahme die beiden Nockenanschläge und damit die Übertragungsflächen für das Drehmoment um 180° um die Rotationsachse (2) versetzt sind. Dies beugt Störungen vor, die bei einseitigen Drehmomenteinwirkungen durch Verziehen oder aufgrund von Unwuchteffekten auftreten könnten.

Die gezeigte Verdrehbegrenzung (1) ermöglicht durch die axiale Nockenversetzung ohne nennenswerten Mehraufwand und bei gleicher Nockenwinkelbreite einen wesentlich größeren maximalen Verdrehwinkel gegenüber den bekannten Anordnungen, die Nocken lediglich in einer einzigen Querebene vorsehen.

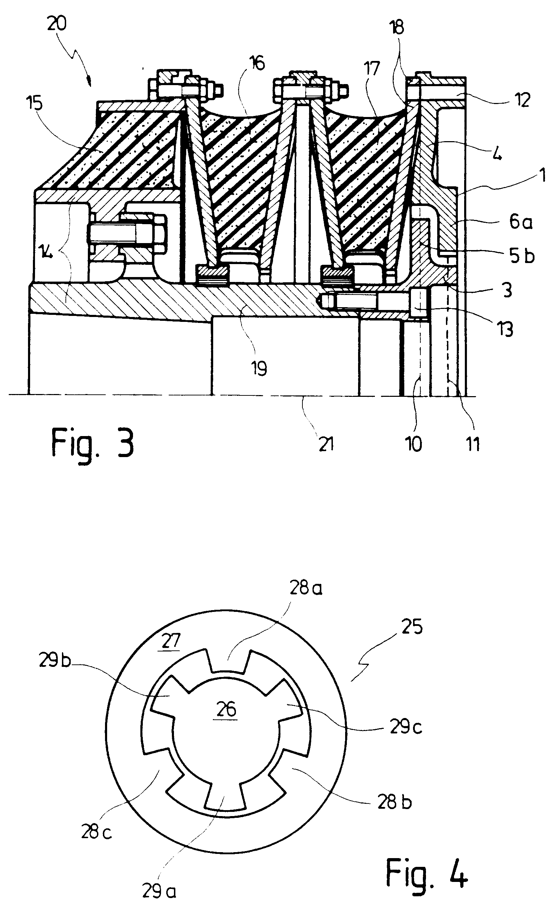

In Fig. 3 ist eine hochelastische Wellenkupplung (20) in einem Mittellängsschnitt gezeigt, die mit der Verdrehbegrenzung (1) ausgerüstet ist. Die Wellenkupplung (20) verbindet zwei um eine Kupplungsachse (21) drehbare Kupplungshälften (14 und 18). Das Endstück der einen Hälfte (14) besteht im wesentlichen aus einer Nabe (19) und einem daran festgelegten, zylindrischen Ring, an den ein erster gummielastischer Kupplungskörper (15) anvulkanisiert ist. Diesem ersten, zwischen zwei koaxialen Zylinderringen konisch anvulkanisierten elastischen Kupplungskörper (15) sind zwei weitere gummielastische Kupplungskörper (16 und 17) mit V-förmigem Querschnitt seriell nachgeschaltet. Die endseitige Begrenzungsfläche (18) des dritten gummielastischen Kupplungskörpers (17) bildet das Anschlußstück der zweiten Kupplungshälfte, an der die weiteren anschließenden Teile in nicht gezeigter Weise festlegbar sind.

An der Stirnseite der Nabe (19) ist über die Bohrungen (13) das innere Begrenzungsteil (3) der Verdrehbegrenzung (1) drehfest mit der ersten Kupplungshälfte (14) festgelegt. Das äußere Begrenzungsteil (4) ist zusammen mit den nicht näher gezeigten weiteren Teilen der anderen Kupplungshälfte über die Bohrungen (12) an einem stirnseitigen Anschlußflansch des den gummielastischen Kupplungskörper (17) begrenzenden Rings (18) drehfest befestigbar. Die Längsachse (2) der Verdrehbegrenzung (1) fällt mit der Kupplungsachse (21) zusammen. Durch die drei in Reihe geschalteten gummielastischen Kupplungskörper (15, 16, 17) ist insgesamt ein relativ großer Verdrehwinkel zwischen den Kupplungshälften (14 und 18) für die Kupplung (20) zulässig. Dies wird durch die oben beschriebenen Eigenschaften der Verdrehbegrenzung (1) ermöglicht. Sie bewirkt eine Notmitnahme der beiden Kupplungshälften (14 und 18) erst bei einer relativen Verdrehung von 150° gegeneinander. Hierbei schlägt dann der in der Querebene (10) liegende Nocken (5b) gegen den ebenfalls in der Querebene (10) auf der nicht gezeigten, gegenüberliegenden Seite der Kupplungsachse (21) liegenden Nocken (6b) des äußeren Begrenzungsrings (4) sowie analog dessen zweiter Nocken (6a) gegen den zweiten Nocken (5a) des inneren Begrenzungsrings (3) an.

Die erfindungsgemäße Verdrehbegrenzung ist aufgrund ihres hohen maximalen Verdrehwinkels besonders für den Einsatz in hochelastischen Wellenkupplungen mit mehreren hintereinandergeschalteten gummielastischen Elementen vorteilhaft. Sie ermöglicht einerseits eine Notmitnahme, zum Beispiel aufgrund eines defekten gummielastischen Kupplungskörpers, und verhindert andererseits ein Anschlagen der Nocken bereits im Normalbetrieb. Letzteres könnte bei bekannten Verdrehbegrenzungen mit vergleichsweise kleinen maximalen Verdrehwinkeln auftreten, da sich die Verdrehwinkel der einzelnen Kupplungskörper im Normalbetrieb bei deren Hintereinanderschaltung addieren.

Die Erfindung ist nicht auf die Anordnung von zwei Nocken pro Begrenzungsteil der Verdrehbegrenzung beschränkt. So kann zum Beispiel auch vorgesehen sein, pro Begrenzungsteil drei Nocken äquidistant am Umfang in drei unterschiedlichen Querebenen anzuordnen. In der unverdrehten Ausgangsstellung sind die beiden Begrenzungsteile dann so gegenseitig angeordnet, daß die Nocken des einen Begrenzungsteils in Drehrichtung mittig zwischen den Nocken des anderen Begrenzungsteils, jedoch in einer anderen Querebene liegend, angeordnet sind. Eine solche Verdrehbegrenzung (25) ist schematisch in der Draufsicht in Fig. 4 angedeutet. An einem äußeren Begrenzungsteil (27) sind am Innenumfang drei Nocken (28a, 28b, 28c) in äquidistanten Abständen dergestalt angeformt, daß sie in drei zueinander axial versetzten Querebenen verlaufen. Hierzu korrespondierend ist ein inneres Begrenzungsteil (26) ebenfalls mit drei Nocken (29a, 29b, 29c) versehen und gegenüber dem äußeren Begrenzungsteil (27) in der verdrehfreien Auslangslage so angeordnet, daß die Nocken (29a bis 29c) jeweils drehwinkelmittig zwischen den Nocken (28a bis 28c) zu liegen kommen. Dabei ist darauf zu achten, daß stets gerade die einander um 180° gegenüberliegenden Nocken (28a, 29a; 28b, 29b; bzw. 28c, 29c) in derselben Querebene angeordnet sind. Diese gegenüberliegenden Nocken bilden so jeweils die Anschläge im Falle der Notmitnahme. Gegenüber dem Ausführungsbeispiel der Verdrehbegrenzung (1) in den Fig. 1 bis 3 wird bei gleicher Nockenwinkelbreite derselbe maximale Verdrehwinkel erreicht. Zwar ist der Herstellungsaufwand durch die Anordnung der Nocken in drei Querebenen geringfügig erhöht, dafür sind jedoch nunmehr drei symmetrisch um die Rotationsachse (2) angeordnete Nockenanschläge, d. h. Drehmomentübertragungsflächen, vorhanden. Die Erfindung umfaßt somit ohne Beschränkung des maximal möglichen Verdrehwinkels Verdrehbegrenzungen mit einer beliebigen Nockenanzahl und damit mit einer beliebigen Anzahl von drehmomentübertragenden Anschlagflächen.

## Patentansprüche

1. Verdrehbegrenzung für eine Wellenkupplung, bestehend aus
einem inneren, drehfest mit einer ersten Kupplungshälfte verbundenen Begrenzungsteil, an dessen Außenumfang mindestens zwei radial nach außen weisende Nocken äquidistant angeformt sind, und
einem äußeren, drehfest mit einer zweiten Kupplungshälfte verbundenen, ringförmigen Begrenzungsteil, an dessen Innenumfang eine der Anzahl der Nocken des inneren Begrenzungsteiles entsprechende Anzahl von Nocken radial nach innen weisend äquidistant angeformt sind, wobei
beide Begrenzungsteile koaxial zu einer Kupplungsachse angeordnet und die Nocken so ausgebildet sind, daß jeder mit seiner in Drehrichtung weisenden Flanke als Anschlag für einen am anderen Begrenzungsteil angeformten Nocken dient,
dadurch gekennzeichnet, daß
sich die Nocken (5a, 5b bzw. 6a, 6b) auf jedem Begrenzungsteil (3 bzw. 4) in unterschiedlichen, axial gegeneinander versetzten Querebenen (10, 11) befinden und
bei unverdrehter Kupplung jedem Nocken (5a bzw. 5b) des inneren Begrenzungsteils (3) ein Nocken (6a bzw. 6b) des äußeren Begrenzungsteils (4) in derselben Querebene (11 bzw. 10) diametral gegenüberliegt.

2. Verdrehbegrenzung nach Anspruch 1, dadurch gekennzeichnet, daß sich jeder Nocken über einen Winkelbereich von 30° erstreckt.

3. Hochelastische Wellenkupplung mit mehreren axial hintereinandergeschalteten, zwei Kupplungshälften miteinander verbindenden gummielastischen Kupplungskörpern und mit einer Verdrehbegrenzung nach Anspruch 1 oder 2, dadurch gekennzeichnet, daß das innere Begrenzungsteil (3) der Verdrehbegrenzung (1) an einer mit dem einen Ende der Kupplungskörperanordnung drehfest verbundenen Kupplungsnabe (19) und das äußere Begrenzungsteil (4) an dem anderen Ende (18) der Kupplungskörperanordnung festgelegt ist.

## Claims

1. Torsion limiter for a flexible coupling, comprising
an inner limiting element connected with a first coupling half for rotation therewith and carrying on its outer circumference at least two equidistantly spaced, integrally formed cams that project in outward direction, and
an outer annular limiting element connected with a second coupling half for rotation therewith and carrying on its inner circumference equidistantly spaced, integrally formed cams pointing radially to the inside, in a number corresponding to the number of cams provided on the inner limiting element,
both limiting elements being arranged coaxially to a coupling axis and the cams being designed in such a way that the leading flank of each of them serves as a stop for a cam formed on the other limiting element,
characterized in that
the cams (5a, 5b or 6a, 6b) are arranged on each limiting element (3 or 4) in different, axially offset transverse planes (10, 11) and that
in the non-rotated state of the coupling each cam (5a or 5b) of the inner limiting element (3) is placed diametrically opposite a cam (6a or 6b) of the outer limiting element (4) in the same transverse plane (11 or 10).

2. Torsion limiter according to claim 1, characterized in that each cam extends over an angular area of 30°.

3. Highly elastic flexible coupling having a plurality of rubber-elastic coupling bodies arranged one behind the other in axial direction and connecting two coupling halves, and comprising a torsion limiter according to claim 1 or 2, characterized in that the inner limiting element (3) of the torsion limiter (1) is fixed on a coupling hub (19) that is connected with the one end of the coupling body arrangement, for rotation therewith, while the outer limiting element (4) is fixed to the other end (18) of the coupling body arrangement.

## Revendications

1. Limiteur de torsion pour accouplement élastique, comprenant
une partie de limitation intérieure conjuguée à une première moitié d'accouplement sur le périmètre extérieur de laquelle sont formés de façon équidistante au moins deux ergots dirigés vers l'extérieur et
une partie de limitation annulaire extérieure conjuguée à une deuxième moitié d'accouplement sur le périmètre intérieur de laquelle sont formés de façon équidistante un nombre d'ergots dirigés radialement vers l'intérieur correspondant au nombre d'ergots de la partie de limitation intérieure,
ces deux parties de limitation étant disposées coaxialement par rapport à un axe d'accouplement et les ergots réalisés de telle sorte que chacun sert avec ses flancs dirigés dans le sens de rotation de butée pour un ergot formé sur l'autre partie de limitation,
caractérisé en ce que
les ergots (5a, 5b ou 6a, 6b) se situent sur chaque partie de limitation (3 ou 4) sur des plans transversaux distincts (10, 11) décalés axialement l'un par rapport à l'autre et
que, si l'accouplement n'est pas tordu, un ergot (6a ou 6b) de la partie de limitation extérieure (4) se trouve diamétralement opposé à chaque ergot (5a ou 5b) de la partie de limitation intérieure (3) dans le même plan transversal (11 ou 10).

2. Limiteur de torsion selon la revendication 1, caractérisé en ce que chaque ergot s'étend par-dessus une gamme d'angle de 30 °.

3. Accouplement élastique à haute flexibilité avec plusieurs corps d'accouplement élastiques montés axialement en série et reliant deux moitiés d'accouplement et un limiteur de torsion selon la revendication 1 ou 2, caractérisé en ce que la partie de limitation intérieure (3) du limiteur de torsion (1) est fixée sur un moyeu d'accouplement (19) relié de façon résistante à la torsion avec l'une des extrémités du groupe de corps d'accouplement et la partie de limitation extérieure (4) sur l'autre extrémité (18) du groupe de corps d'accouplement.
